# EUROPEAN PATENT SPECIFICATION

(11) **EP 1 416 482 B1**
(45) Date of publication and mention of the grant of the patent: **27.09.2006**
(21) Application number: 03024977.5
(22) Date of filing: 29.10.2003
(51) Int. Cl.: G11B 17/028, G11B 33/08

(54) **Turntable unit positioning structure in disk apparatus**
Positionierungsstruktur einer Drehtischeinheit in einer Plattenvorrichtung
Structure de positionnement de table tournante dans un appareil à disque

(30) Priority: 30.10.2002 JP 2002315778
(43) Date of publication of application: 06.05.2004
(73) Proprietor: ORION ELECTRIC CO., Ltd., Takefu-shi, Fukui 915-8555 (JP)
(72) Inventor: Azai, Kouji, Takefu-shi Fukui 915-8555 (JP)
(74) Representative: Vossius & Partner

(56) References cited:
- EP-A- 0 860 832
- US-A- 5 936 927
- US-B1- 6 252 839
- PATENT ABSTRACTS OF JAPAN vol. 2000, no. 11, 3 January 2001 (2001-01-03) -& JP 2000 222803 A (MATSUSHITA ELECTRIC IND CO LTD), 11 August 2000 (2000-08-11)

## Description

The present invention relates to a traverse unit positioning structure in a disc apparatus, which has a simple structure and the traverse unit is precisely positioned in the disc apparatus.

The disc apparatus uses a turntable to rotate a disc for recording data, e.g. of sounds or pictures on the disc, or for reproducing sounds or pictures that have been recorded on the disc. There are a variety of units for loading a disc in the disc apparatus. A representative loading unit uses a movable tray, which appears from the front of the apparatus housing, and withdraws and moves to the turntable, carrying a disc for loading. When the disc is put between the turntable and a clamping member and is rotated, an optical pickup moves toward the rotating disc for reproducing sound or pictures from the disc.

Another loading unit uses a pull-in mechanism, which is responsive to direct insertion of a disc through the disc slot at the front of the apparatus for pulling and carrying the disc to the turntable. One example of such pull-in mechanism uses two parallel running belts arranged in the vicinity of the opposite sides of the disc slot. In response to insertion of the disc through the disc slot, the parallel belts pinch the disc therebetween, start running and carrying it to the turntable for loading. Another example uses rotating rolls in place of the parallel running belts. These rolls are arranged in the vicinity of the opposite sides of the disc slot. The rolls pinch the disc when inserted through the disc slot, and rotate and carry it to the turntable for loading.

In any units for carrying the disc to the turntable, if the turntable were always placed at a horizontal position for the disc to be held and rotated, the disc would hit the turntable when being inserted to reach the turntable. Therefore, the turntable, a motor for driving the turntable, and a optical pickup for reading information on the disc are all mounted onto the traverse unit, which is swingably fixed to the apparatus housing and stays at a slanting and open position when disc is not loaded, so as to leave a passageway to the turntable open for a disc. Specifically the traverse unit is designed to rotate about its pivot, and when a disc is inserted and reached a predetermined position, the traverse unit is swingably rotated to a horizontal position to hold the disc between the turntable and an upper clamping member.

JP2000-222803(A) discloses a positioning structure of traverse unit of the type described above, where the traverse unit positioning structure is designed for improvements in simplification of structure, in impact resistance and in quake resistance, in manufacturing efficiency and having the features as follows:
1) the traverse unit is swingably arranged in an open space of the apparatus housing;
2) the traverse unit has a turntable, a drive motor, an optical pickup and their driving mechanism all mounted to a substantially rectangular frame;
3) the traverse unit is swingably fixed to the apparatus housing to vertically rotate about the rear edge of the traverse unit;
4) a cam gear having a cam groove formed on its circumference is placed in the vicinity of the front edge of the traverse unit;
5) the traverse unit has a projection formed on the front edge, and the traverse unit is operatively connected to the cam gear with the projection movably engaged with the cam groove;
6) the traverse unit has a reciprocating rod provided on the front edge, whereas the apparatus housing has a counter hole for accommodating the reciprocating rod when projecting from the front edge of the traverse unit, thereby putting the traverse unit in correct position;
7) the pickup-feeding rack which can move across the traverse unit is connected to the reciprocating rod, so that the pickup-feeding rack may push the reciprocating rod into the counter hole when the pickup-feeding rack advances;
8) the cam gear has a hook-like projection formed on its circumference, which can be engaged with an arc groove formed on the concave cut of the front edge of the traverse unit, the arc groove being exactly same as the corresponding part of the circular circumference of the cam gear; and
9) the traverse unit is supported on the rear edge by shock-absorbing members, and likewise, the cam gear is supported by a shock-absorbing member.

With this arrangement the disc apparatus can be loaded with a disk as follows: the cam gear rotates so that the projection of the traverse unit follow the cam groove of the rotating cam gear, thereby controlling the traverse unit in respect of its level; the reciprocating rod is allowed to project into the counter hole, thereby holding the traverse unit in correct lateral slider position; and the hook-like projection engages with the arc groove to hold the traverse unit in correct longitudinal position. Also, the traverse unit is supported in floating condition within the scope of elasticity by the shock-absorbing member, and therefore, it cannot be susceptible to any impulsive shock or shake when applied to the disc apparatus.

The conventional traverse unit positioning structure, however, has disadvantages as follows:
1) in the disc clamping position the traverse unit can be kept stable in its posture, but in the withdrawal position it cannot be kept stable; it is apt to somewhat shake or rattle when undesired force is applied to the disc apparatus because of the lack of lateral slider stabilizer;
2) an impulsive shock or shake can be easily transmitted from the disc apparatus housing to the traverse unit via the reciprocating unit of the traverse unit, which reciprocating unit is inserted into the counter hole of the apparatus housing;
3) some mechanisms for controlling the reciprocating rod and the hook-like projection and other associated parts occupy a relatively large space, and accordingly the disc apparatus increases its size;
4) the traverse unit is controlled in respect of its movement and position by the separate, independent mechanisms, often preventing their relative movements in liaison; and
5) a lot of parts are required to position the traverse unit, and accordingly the structure is complicated.

In view of the above one object of the present invention is to provide a traverse unit positioning structure which assures that the optical pickup can be precisely positioned relative to the loaded disc, and that the traverse unit is unsuscepti6le to an impulsive shock or shake from the exterior. Also, it is to provide a traverse unit positioning structure where a traverse unit can be remained stable in its withdrawal position and capable of smoothly inclining and positioning, and further to make with minimum parts, and accordingly its size can be significantly reduced.

To attain this object a traverse unit positioning structure in a disc apparatus according to the present invention comprises: a traverse unit to be mounted in a housing of the disc apparatus, the traverse unit having a substrate and a turntable fixed on the substrate, one end of the substrate is pivotally fixed to the housing via shock-absorbing members; a holder attached to the other end of the substrate via another shock-absorbing members, the holder having a vertical front wall, opposite side walls and a bottom wall, the vertical front wall having a projection on its outer surface, and the opposite side walls having ribs respectively; a lateral slider fixed to the housing slidably along the vertical front wall of the holder, the lateral slider having a cam groove formed on its rear side surface, the cam groove sloping from lower to higher level, the holder being operatively connected to the lateral slider with the projection fitted in the cam groove, thus causing the traverse unit to rise and descend when the lateral slider moves back and forth laterally; and stationary guide plates fixed to the housing, the guide plates having grooves associated with the ribs of the holder so as to be slidably fitted in, thereby allowing a disc to be precisely positioned on the turntable.

The ribs of the holder and the grooves of the stationary guide plates may be of trapezoid shape, and are arranged so as to allow each rib to be tightly fitted in the groove when the other end of the traverse unit ascends, and to allow each rib to be somewhat inclined in the groove and be put in contact with inner walls of the groove at two points when the other end descends.

The traverse unit may further comprise a stopper post fixed to the housing of the disc apparatus so that the holder abuts on the stopper post when the other end of the traverse unit descends.

Other objects and advantages of the present invention will be understood from the following description of a traverse unit positioning structure according to one preferred embodiment of the present invention, which is shown in accompanying drawings.

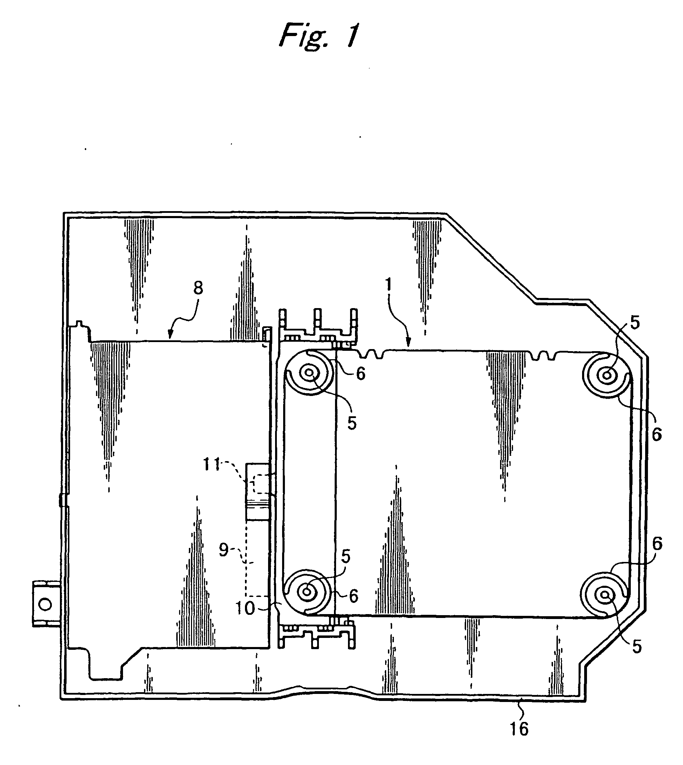

Fig.1 is a plan view of a traverse unit positioning structure in a disc apparatus according to the present invention;
Figs.2(a) and 2(b) show longitudinal sections thereof;
Figs.3(a) and 3(b) are plan and front views of a lateral slider with a cam groove;
Fig.4 is a perspective view of the traverse unit with a holder;
Fig.5 illustrates arrangement of the stationary guide plates relative to the lateral slider; and
Fig.6 illustrates how the ribs change their postures in the grooves of the stationary guide plates.

Referring to the accompanying drawings, a traverse unit positioning structure in a disc apparatus comprises: a traverse unit 1 mounted in a housing 16 of the disc apparatus, the traverse unit 1 having a substrate 7 and a turntable (not shown) fixed on the substrate 7; a holder 10 attached to the front end of the substrate 7; a lateral slider 8 fixed slidably to the housing 16; and stationary guide plates 13 fixed to the housing 16.

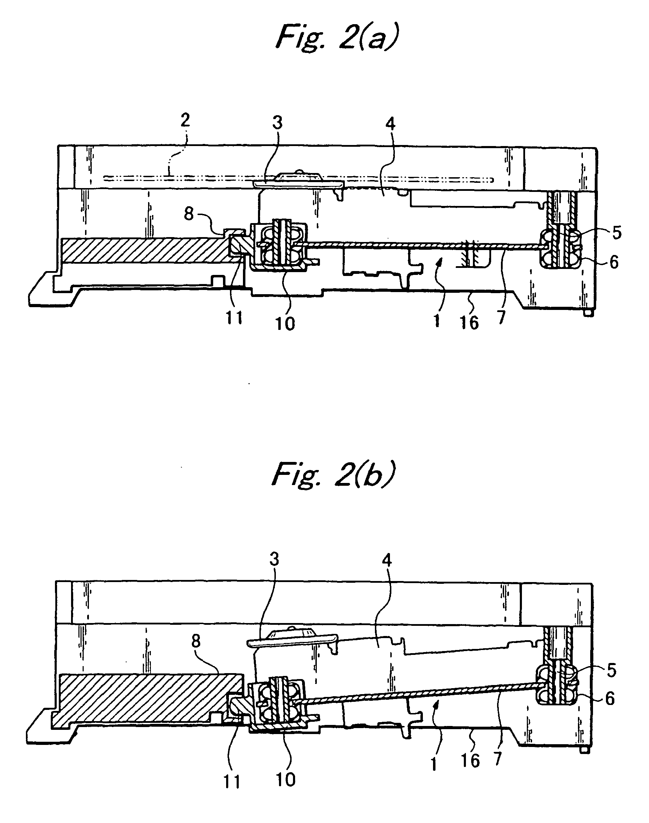

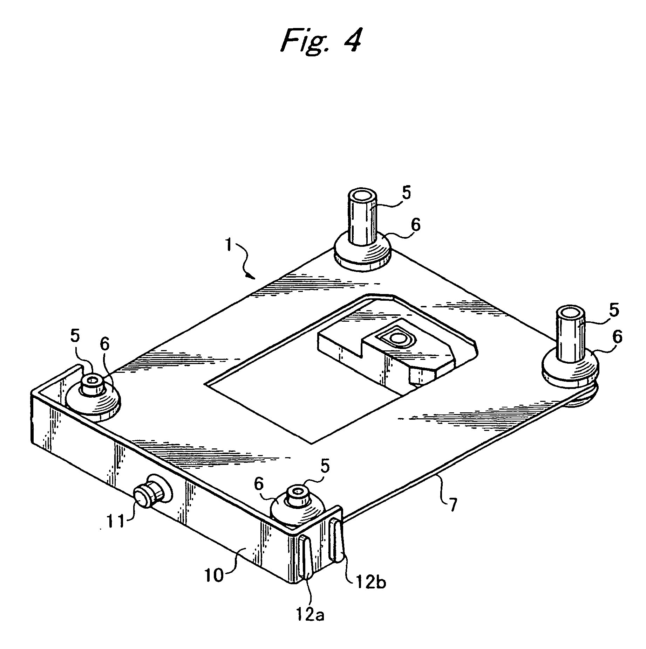

As shown in Figs.2(a) and 2(b), the rear end of the substrate 7 is pivotally fixed to vertical rods 5 formed in the housing 16. Shock-absorbing member 6 is arranged around the respective vertical rods 5 covering the upper and lower sides of the substrate 7. Another two shock-absorbing members 6 are arranged in the vicinity of the holder 10 and on upper and lower sides of the substrate 7 at the front end (see Figs.2(a), 2(b) and 4).

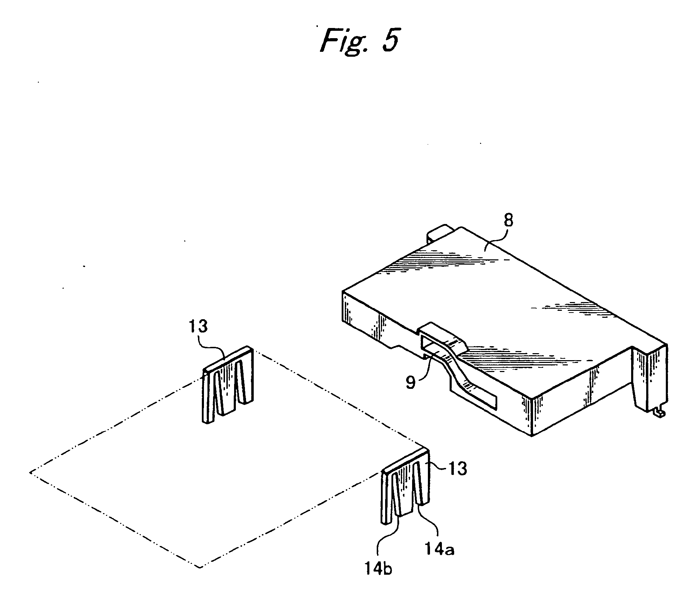

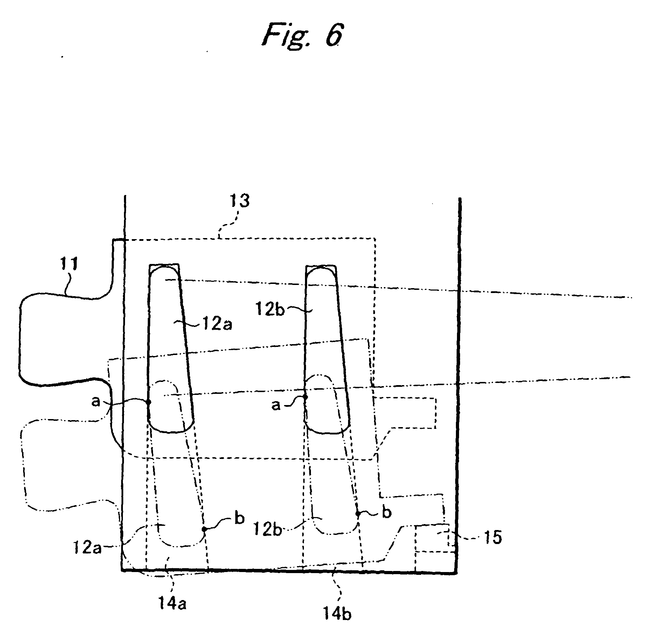

The holder 10 has a vertical front wall, opposite side walls and a bottom wall identically, and a projection 11 is formed on the outer surface of the vertical front wall (see Figs.2(a), 2(b) and 4). The opposite side walls have ribs 12a and 12b formed thereon (see Fig.4), while stationary guide plates 13 are fixed to the housing 16 and arranged in the vicinity of the ribs 12a and 12b respectively. Each of the stationary guide plates 13 has grooves 14a and 14b corresponding to the ribs 12a and 12b so that the ribs 12a and 12b are slidably fitted in the grooves 14a and 14b (see Figs.5 and 6).

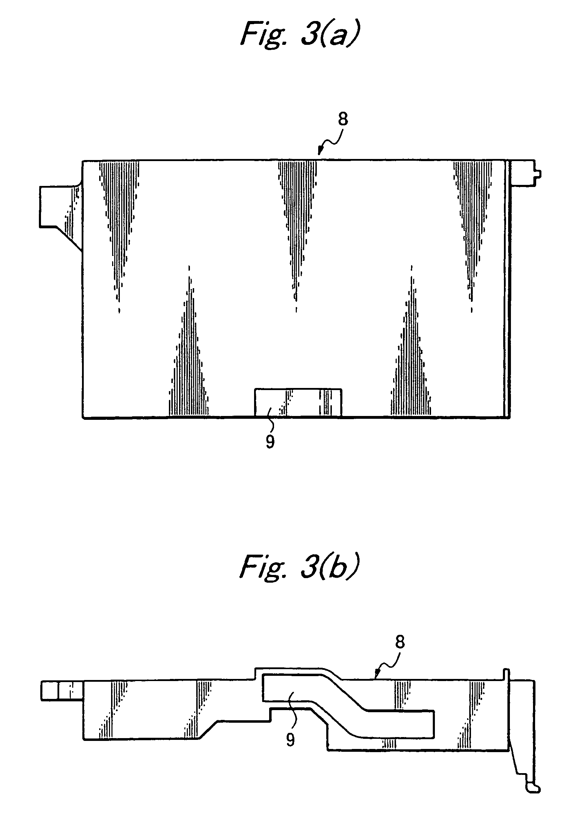

The lateral slider 8 is fixed on the housing 16 slidably along the vertical front wall of the holder 10. A cam groove 9 is formed on the rear side surface of the lateral slider 8 confronting with the vertical front wall of the holder 10. The cam groove 9 slopes from a lower level to a higher level (see Figs.3(b) and 5). The holder 10 is operatively connected to the lateral slider 8 with the projection 11 engaged with the cam groove 9, so that the traverse unit 1 may rotate so that the front end descends and ascends when the lateral slider 8 slides back and forth laterally.

As seen from Figs.4 and 5, the ribs 12a and 12b of the holder 10 and the grooves 14a and 14b of the stationary guide plates 13 are of trapezoid shape, thereby allowing each rib 12a or 12b to be tightly fitted in the groove 14 when the front end of the traverse unit 1 is raised, and allowing each rib 12a or 12b to be somewhat inclined in the groove and be put in contact with inner walls of the groove at two points "a" and "b" when the other lateral edge is lowered, as seen from Fig.6.

A stopper post 15 is fixed to the housing 16, so that the holder 10 abuts on the stopper post when the front end of the traverse unit 1 descends.

Now, a manner in which the traverse unit positioning structure works is described below.

Fig.2(a) shows a sectional view where the front end of the traverse unit 1 is raised into the horizontal loading position, in which a disc 2 is laid on the turntable 3.

Fig.2(b) shows a sectional view where the traverse unit 1 is inclined to lower the other lateral edge thereof, giving a disc 2 a passageway between the disc slot and the loading position. Specifically the turntable 3 is lowered below the level of the passageway for the disc. When the disc 2 is inserted through the disc slot to reach a predetermined position, the traverse unit 1 turns to raise the front end thereof, where a central protrusion of the turntable 3 is inserted to fit in the center hole of the disc 2, as seen from Fig.2(a). The front end of the traverse unit 1 can be raised, while the lateral slider 8 moves from one to the other side, which allows the projection 11 to relatively slide from the lower level to the higher level in the cam groove. The front end of the traverse unit 1 can also be lowered, while the lateral slider 8 moves from the other to the one side, which allows the projection 11 to relatively slide from the higher level to the lower level in the cam groove. As shown in Fig.4, the projection 11 has a round distal end to be engaged with the cam groove 9 so that the projection 11 can smoothly move along the cam groove 9.

The optical pickup 4 is positioned precisely relative to the disc 2 all the time while the disc 2 is laid on the turntable 3 so that a distance between the pickup 4 and the disc 2 is always kept constant, whereby the information can precisely be recorded or reproduced from the disc 2. The traverse unit 1 is so suspended as to be unsusceptible to an impulsive shock or shake, which may be applied to the disc apparatus from the exterior.

Referring to Figs.2(a) and 2(b), the traverse unit 1 can incline down about the vertical rods 5. Each of the shock-absorbing members 6 is made of rubber and is hollow, so that the hollow rubber member 6 is responsive to the inclining of the traverse unit 1 for changing its shape, thus assuring that the traverse unit 1 can be inclined smoothly. At the same time, the shock-absorbing members 6 can absorb an impulsive shock or shake, which otherwise, would be transmitted from the apparatus housing to the traverse unit 1.

As seen from Figs.2(a), 2(b) and 4, the holder 10 is fixed to the substrate 7 by the shock-absorbing members 6, which connect the bottom wall of the holder 10 to the substrate 7. Thus, any shock or shake cannot be transmitted to the substrate 7 via the holder 10, either.

As the lateral slider 8 moves from one to the other side (rightward in Fig.5), the traverse unit 1 is rotated from the lower, slanting position (see Fig.2(b)) to the higher, horizontal position (see Fig.2(a)), and then the ribs 12a and 12b of the holder 10 are fitted in the tapering ends of the trapezoid grooves 14a and 14b so that the traverse unit 1 may be precisely and fixedly held in the loading position (see Fig.6).

As the lateral slider 8 moves from the other to the one side (leftward in Fig.5), the traverse unit 1 is rotated from the higher, horizontal position to the lower, slanting position, and then each rib 12a or 12b of the holder 10 is released and somewhat inclined in the tapering groove and is put in contact with the groove wall at two points "a" and "b" (see Fig.6). Thus, the traverse unit 1 stays fixedly even when the traverse unit 1 remains in the lower, slanting position. The number of the ribs 12a and 12b can be one on either side of the holder 10.

The stopper post 15 may be fixed to the floor of the housing of the disc apparatus to abut against the descending holder 10, thus supporting the traverse unit 1.

## Claims

1. A traverse unit positioning structure in a disc apparatus comprising a traverse unit (1) to be mounted in a housing (16) of the disc apparatus, the traverse unit (1) having a substrate (7) and a turntable (3) fixed on the substrate, one end of the substrate is pivotally fixed to the housing via shock-absorbing members (6), **characterized by** further comprising:
a holder (10) attached to the other end of the substrate via other shock-absorbing members (6), the holder (10) having a vertical front wall, opposite side walls and a bottom wall, the vertical front wall having a projection (11) on its outer surface, and the opposite side walls having ribs (12a, 12b) respectively;
a lateral slider (8) fixed to the housing slidably along the vertical front wall of the holder (10), the lateral slider (8) having a cam groove (9) formed on its rear side surface, the cam groove (9) sloping from lower to higher level, the holder (10) being operatively connected to the lateral slider with the projection (11) fitted in the cam groove (9), thus causing the traverse unit to rise and descend when the lateral slider moves back and forth laterally; and
stationary guide plates (13) fixed to the housing, the guide plates (13) having grooves (14a, 14b) associated with the ribs (12a, 12b) of the holder so as to be slidably fitted in, thereby allowing a disc to be precisely positioned on the turntable (3).

2. A traverse unit positioning structure according to claim 1, wherein the ribs (12a, 12b) of the holder (10) and the grooves (14a, 14b) of the stationary guide plates (13) are of trapezoid shape, and are arranged so as to allow each rib to be tightly fitted in the groove when the other end of the traverse unit ascends, and to allow each rib to be somewhat inclined in the groove and be put in contact with inner walls of the groove at two points (a, b) when the other end descends.

3. A traverse unit positioning structure according to claim 1 or 2, further comprising a stopper post (15) fixed to the housing (16) of the disc apparatus so that the holder (10) abuts on the stopper post when the other end of the traverse unit (1) descends.

## Patentansprüche

1. Positionierungsstruktur einer Traversiereinheit in einer Plattenvorrichtung, die eine Traversiereinheit (1) aufweist, die in einem Gehäuse (16) der Plattenvorrichtung zu montieren ist, wobei die Traversiereinheit (1) einen Träger (7) und einen auf dem Träger befestigten Drehtisch (3) aufweist, wobei ein Ende des Trägers über Stoßdämpferelemente (6) schwenkbar an dem Gehäuse befestigt ist, **dadurch gekennzeichnet, daß** die Positionierungsstruktur ferner aufweist:
einen am anderen Ende des Trägers über andere Stoßdämpferelemente (6) angebrachten Halter (10) mit einer vertikalen Vorderwand, einander gegenüberliegenden Seitenwänden und einer Bodenwand, wobei die vertikale Vorderwand an ihrer Außenfläche einen Vorsprung (11) aufweist und die einander gegenüberliegenden Seitenwände jeweils Rippen (12a, 12b) aufweisen;
einen am Gehäuse entlang der vertikalen Vorderwand des Halters (10) verschiebbar angebrachten Querschieber (8), wobei an der Rückseite des Querschiebers (8) eine Kurvennut (9) ausgebildet ist, wobei die Kurvennut (9) von einem niedrigeren zu einem höheren Niveau schräg ansteigt, wobei der Halter (10) durch den in die Kurvennut (9) eingreifenden Vorsprung (11) funktionsfähig mit dem Querschieber verbunden ist und auf diese Weise bewirkt, daß die Traversiereinheit sich nach oben und nach unten bewegt, wenn sich der Querschieber in Seitenrichtung hin und her bewegt; und
am Gehäuse befestigte stationäre Führungsplatten (13), wobei die stationären Führungsplatten (13) Nuten (14a, 14b) aufweisen, die so mit den Rippen (12a, 12b) des Halters verbunden sind, daß sie darin verschiebbar angebracht sind, wodurch eine Platte präzise auf dem Drehtisch (3) positioniert werden kann.

2. Positionierungsstruktur einer Traversiereinheit nach Anspruch 1, wobei die Rippen (12a, 12b) des Halters (10) und die Nuten (14a, 14b) der stationären Führungsplatten (13) trapezförmig sind und so angeordnet sind, daß ein fester Sitz jeder Rippe in der Nut ermöglicht wird, wenn sich das andere Ende der Traversiereinheit nach oben bewegt, und daß jede Rippe ein wenig geneigt in der Nut angeordnet und an zwei Punkten (a, b) mit Innenwänden der Nut in Kontakt gebracht werden kann, wenn sich das andere Ende nach unten bewegt.

3. Positionierungsstruktur einer Traversiereinheit nach Anspruch 1 oder 2, die ferner einen Anschlagstift (15) aufweist, der so am Gehäuse (16) der Plattenvorrichtung befestigt ist, daß der Halter (10) an den Anschlagstift anstößt, wenn sich das andere Ende der Traversiereinheit (1) nach unten bewegt.

## Revendications

1. Structure de positionnement d'unité de traverse dans un appareil à disque comprenant une unité de traverse (1) destinée à être montée dans un boîtier (16) de l'appareil à disque, l'unité de traverse (1) ayant un substrat (7) et une table tournante (3) fixée sur le substrat, une extrémité du substrat est fixée de manière pivotante sur le boîtier via des éléments d'amortissement (6), **caractérisé en ce qu'**elle comprend en outre :
un support (10) fixé sur l'autre extrémité du substrat via d'autres éléments d'amortissement (6), le support (10) ayant une paroi avant verticale, des parois latérales opposées et une paroi inférieure, la paroi avant verticale ayant une saillie (11) sur sa surface externe, et les parois latérales opposées ayant des nervures (12a, 12b) respectivement ;
une glissière latérale (8) fixée sur le boîtier de manière coulissante le long de la paroi avant verticale du support (10), la glissière latérale (8) ayant une rainure de came (9) formée sur sa surface latérale arrière, la rainure de came (9) s'inclinant du niveau inférieur jusqu'au niveau supérieur, le support (10) étant raccordé de manière opérationnelle à la glissière latérale avec la saillie (11) montée dans la rainure de came (9), amenant ainsi l'unité de traverse à monter et à descendre lorsque la glissière latérale se déplace d'avant en arrière latéralement ; et
des plaques de guidage fixes (13) fixées sur le boîtier, les plaques de guidage (13) ayant des rainures (14a, 14b) associées aux nervures (12a, 12b) du support afin d'être placées de manière coulissante, permettant ainsi à un disque d'être positionné précisément sur la table tournante (3).

2. Structure de positionnement d'unité de traverse selon la revendication 1, dans laquelle les nervures (12a, 12b) du support (10) et les rainures (14a, 14b) des plaques de guidage fixes (13) ont une forme trapézoïdale, et sont agencées pour permettre à chaque nervure d'être montée de manière serrée dans la rainure lorsque l'autre extrémité de l'unité de traverse monte, et pour permettre à chaque nervure d'être légèrement inclinée dans la rainure, et d'être placée en contact avec les parois internes de la rainure au niveau de deux points (a, b) lorsque l'autre extrémité descend.

3. Structure de positionnement d'unité de traverse selon la revendication 1 ou 2, comprenant en outre un montant de butée (15) fixé sur le boîtier (16) de l'appareil à disque de sorte que le support (10) vient en butée contre le montant de butée lorsque l'autre extrémité de l'unité de traverse (1) descend.
